# FASCICULE DE BREVET EUROPEEN

(11) **EP 2 856 613 B1**
(45) Date de publication et mention de la délivrance du brevet: **30.09.2020**
(21) Numéro de dépôt: 13730000.0
(22) Date de dépôt: 29.05.2013
(51) Int. Cl.: H02K 1/27

(54) **ROTOR DE MACHINE ÉLECTRIQUE ET RESSORT POUR LE MAINTIEN RADIAL D'AIMANT PERMANENT ASSOCIE**
LÄUFER EINER ELEKTRISCHE MASCHINE UND FEDER ZUR HALTERUNG EINES DAZUGEHÖRIGES DAUERMAGNET
ROTOR OF AN ELECTRIC MACHINE AND ASSOCIATED PERMANENT MAGNET RETAINING SPRING

(30) Priorité: 30.05.2012 FR 1254949
(43) Date de publication de la demande: 08.04.2015
(73) Titulaire: Valeo Equipements Electriques Moteur, 94046 Créteil Cedex (FR)
(72) Inventeur: WALME, Benoit, F-78810 Feucherolles (FR); LABROSSE, Jean-Claude, F-94220 Charenton Le Pont (FR); LEROY, Virginie, F-93330 Neuilly Sur Marne (FR); EL BARAKA, Khadija, F-77600 Bussy St Georges (FR); JUGOVIC, Svetislav, Jusisy-sur-orge (FR); RAKOTOVAO, Mamy, F-94400 Vitry Sur Seine (FR); KIM, Nam-Gook, F-94410 Saint-maurice (FR); BOUARROUDJ, Lilya, F-94220 Charenton Le Pont (FR)
(74) Mandataire: Duprez, Richard
(86) Numéro de dépôt international: PCT/FR2013/051193
(87) Numéro de publication internationale: WO 2013/178942

(56) Documents cités:
- WO-A2-2012/022731
- DE-A1-102008 018 724
- FR-A1- 2 784 248
- FR-A1- 2 963 175
- JP-A- 2000 175 388
- JP-A- 2004 357 418
- US-A1- 2009 079 285

## Description

### DOMAINE TECHNIQUE DE L'INVENTION

L'invention concerne un rotor pour machine électrique ainsi que le ressort pour le maintien radial d'aimant permanent associé.

L'invention trouve une application particulièrement avantageuse, mais non exclusive, avec les compresseurs utilisés pour la compression de fluide réfrigérant de climatiseur de véhicule automobile.

### ETAT DE LA TECHNIQUE

On connaît des machines électriques comportant un stator et un rotor solidaire d'un arbre assurant la mise en mouvement d'un compresseur à spirale, également connu sous le nom de "compresseur scroll". Un tel système comporte deux spirales intercalées comme des palettes pour pomper et comprimer le fluide réfrigérant. En général, une des spires est fixe, alors que l'autre se déplace excentriquement sans tourner, de sorte à pomper puis emprisonner et enfin comprimer des poches de fluide entre les spires. Un tel système est par exemple décrit dans le document EP1 865 200.

Le rotor réalisé en tôle feuilletée comporte une âme centrale, et des bras s'étendant radialement par rapport à l'âme. Ces bras comportent chacun deux rebords s'étendant circonférentiellement de part et d'autre des bras. Des aimants permanents sont positionnés à l'intérieur de logements délimités chacun par deux faces en regard l'une de l'autre de deux bras adjacents, une face externe de l'âme du rotor, et les rebords des bras.

Lorsque les tolérances utilisées dans la réalisation du rotor sont grandes afin de réduire les coûts de fabrication, il est possible que les aimants soient mal plaqués à l'intérieur des logements du rotor.

WO2012022731 décrit un rotor ou un stator pour une machine électrique, en particulier un rotor comprenant un aimant permanent disposé dans un logement du rotor. Un ressort servant à fixer l'aimant permanent dans le logement est prévu dans le rotor.

DE102008018724 décrit un moteur avec des aimants permanents.

FR2963175 décrit un rotor pour moteur synchrone comportant une pluralité d'aimants insérés dans une pluralité de logements respectifs ménagés dans le rotor.

Les autres documents US2009079285, JP2000175388, JP2004357418 et FR2784248 décrivent également ce type de conception.

### OBJET DE L'INVENTION

L'invention a pour but de remédier à cet inconvénient.

A cet effet, on utilise des ressorts positionnés à l'intérieur des logements entre la face externe de l'âme et une face de l'aimant tournée vers l'axe du rotor. Ces ressorts assurent un maintien de l'aimant à l'intérieur de son logement contre les rebords des bras du rotor en exerçant par déformation un effort radial sur l'aimant de l'intérieur vers l'extérieur du rotor. L'invention permet ainsi de garantir un bon plaquage de l'aimant à l'intérieur de son logement quelle que soit la vitesse de rotation du rotor.

L'invention concerne donc un rotor selon la revendication 1.

Selon une réalisation, les ressorts travaillent dans un domaine élasto-plastique.

Selon une réalisation, les ressorts comportent chacun une portion arrondie centrale, et deux portions arrondies d'extrémité situées de part et d'autre de la portion arrondie centrale, la portion arrondie centrale et les portions arrondies d'extrémité ayant des courbures inversées.

Selon une réalisation, le rotor comporte en outre des lames réalisées dans un matériau plus souple que les aimants permanents positionnées entre les rebords des bras et la face de l'aimant permanent tournée du côté opposé à l'axe du rotor.

Il est également prévu que les bras s'étendent radialement par rapport à l'âme en suivant un rayon de courbure et le ratio entre la largeur à la base des bras et ledit rayon de courbure est inférieur ou égal à 1.

Ce ratio permet de limiter les efforts mécaniques à la base des bras.

Selon un mode de réalisation, l'un au moins des bras présente un renfoncement entre l'extension radiale du bras et chacun de ses deux rebords.

L'invention concerne en outre le ressort pour le maintien radial d'aimants permanents en tant que tel caractérisé en ce qu'il comporte:
- une portion arrondie centrale, et
- deux portions arrondies d'extrémités situées de part et d'autre de la portion arrondie centrale,
- la portion arrondie centrale et les portions arrondies d'extrémité ayant des courbures inversées.

Selon une réalisation, un rayon de courbure de la portion arrondie centrale est supérieur au rayon de courbure des portions arrondies d'extrémité.

Selon une réalisation, le rayon de courbure de la portion arrondie centrale est environ trois fois plus grand que le rayon de courbure des portions arrondies d'extrémité.

Selon une réalisation, le ressort comporte en outre une extrémité biseautée suivant une direction longitudinale du ressort.

Selon une réalisation, le ressort comporte une fente le long de l'extrémité biseautée pour réduire la rigidité de l'extrémité biseauté.

Selon une réalisation, la fente s'étend sur une longueur légèrement plus grande que la longueur suivant laquelle s'étend l'extrémité biseautée.

Selon une réalisation, le ressort présente une largeur de l'ordre de 5 millimètres, une hauteur de l'ordre de 1, 5 millimètres, et une longueur de l'ordre de 40 millimètres.

Selon une réalisation, le ressort est réalisé de préférence en acier inoxydable.

### BREVE DESCRIPTION DES FIGURES

L'invention sera mieux comprise à la lecture de la description qui suit et à l'examen des figures qui l'accompagnent. Ces figures ne sont données qu'à titre illustratif mais nullement limitatif de l'invention.
La Figure 1 montre une vue de dessus du rotor selon l'invention sans l'un de ses flasques ;
La Figure 2 montre une vue en perspective du ressort selon l'invention;
Les Figures 3a-3c montrent des vues de face, de côté et de haut du ressort selon l'invention.
La figure 4 est une vue en perspective du rotor équipé de ces flasques à poids d'équilibrage.

Les éléments identiques, similaires ou analogues conservent la même référence d'une figure à l'autre.

### DESCRIPTION D'EXEMPLES DE REALISATION DE L'INVENTION

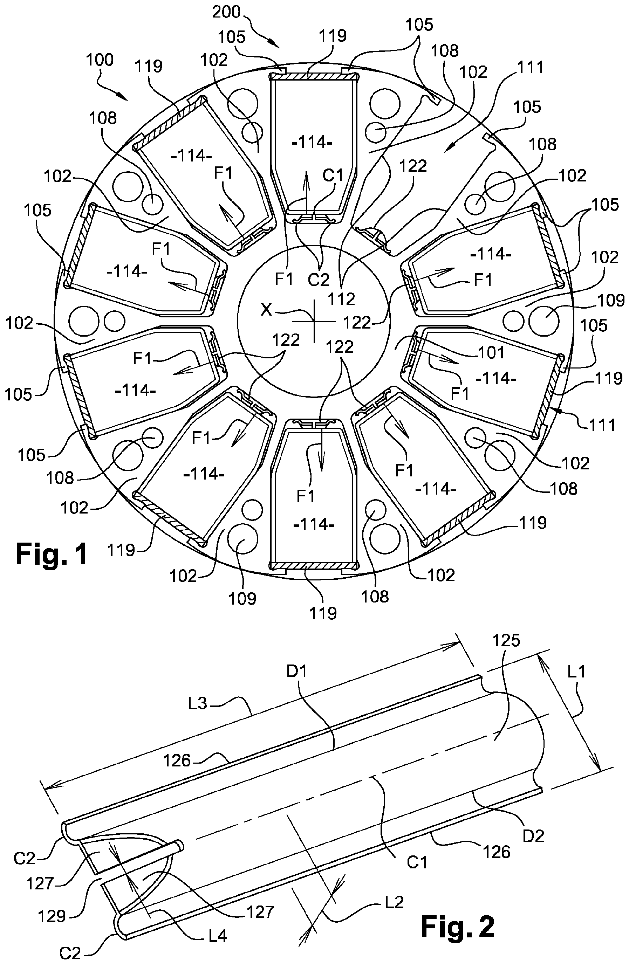

La Figure 1 montre un rotor 100 selon l'invention d'axe X destiné à être monté sur un arbre (non représenté). Ce rotor à aimants permanents appartient à une machine électrique tournante, qui pourra être un compresseur utilisé pour la compression de fluide réfrigérant de climatiseur de véhicule automobile. En variante cela pourra être un moteur électrique ou un alternateur. L'arbre pourra être un arbre menant ou un arbre mené. De manière connue la machine électrique comporte un stator, qui pourra être polyphasé, entourant le rotor. Ce stator est porté par un carter configuré pour porter à rotation l'arbre via des roulements à billes et ou à aiguilles comme visible par exemple dans le document EP 1 865 200 précité.

Le rotor 100 est formé par un empilement de tôles s'étendant dans un plan radial perpendiculaire à l'axe X. Le paquet de tôle forme le corps du rotor 100 et est en matière ferromagnétique. Ce paquet de tôles comporte ici une âme centrale 101 et des bras 102 s'entendant radialement et axialement à partir de l'âme 101 par rapport à l'axe X. Ces bras 102 comportent chacun à leur extrémité libre deux rebords 105 s'étendant circonférentiellement de part et d'autre des bras 102. Les rebords 105 ont pour fonction de retenir dans la direction radiale des aimants permanents 114 du rotor. Les rebords 105 sont implantés à la périphérie externe du rotor 100.

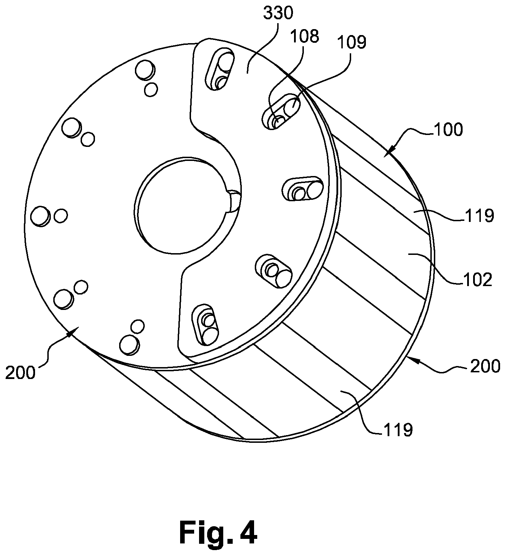

Les bras 102 sont dans un mode de réalisation d'un seul tenant avec l'âme 101. En variante, tous les bras 102 ou certains d'entre eux seulement sont rapportés sur l'âme 101, par exemple par une liaison du type tenons-mortaises comme décrit dans le document FR2856532. Dans un plan radial, les tôles du rotor 100 ont toutes un contour identique. Le contour des tôles est découpé de forme globalement circulaire et comporte les bras 102 qui sont répartis régulièrement selon une direction radiale vers la périphérie externe. Les tôles sont maintenues au moyen de rivets 108 positionnés sur une même circonférence du corps du rotor 100 et traversant axialement de part en part l'empilement des tôles via des ouvertures (non référencés) pour formation d'un ensemble manipulable et transportable. Le corps comporte également des ouvertures (non référencées) pour recevoir des tirants d'assemblage 109 de deux flasques 200 (figure 4) plaqués de part et d'autre du rotor sur ses faces d'extrémité radiales. Ces flasques peuvent être utilisés pour assurer un équilibrage du rotor 101. Les flasques 200 sont en matière amagnétique par exemple en Aluminium. Les rivets 108 et les tirants 109 sont avantageusement en matière amagnétique telle que de l'inox. Les tirants 109 ont un diamètre supérieur à celui des rivets 108 et sont implantés sur une circonférence de diamètre supérieur à celui des rivets. Ici le nombre de tirant est égal au nombre de rivets.

Le rotor 100 comporte des logements 111 destinés à recevoir les aimants permanents 114. Les aimants pourront être en terre rare ou en ferrite selon les applications et la puissance recherchée de la machine électrique tournante. Plus précisément, les logements 111 sont délimités chacun par deux faces latérales 112 en regard l'une de l'autre de deux bras 102 adjacents, une face externe de l'âme 101 s'étendant entre les deux bras 102, et des faces des rebords 105 tournées vers l'âme 101 appartenant aux deux bras 102 adjacents. Ces logements 111 sont donc borgnes en étant ouverts à leur périphérie externe.

Les logements 111 présentent une forme complémentaire à celle des aimants 114 qui ont une forme parallélépipédique ayant deux angles biseautés à leur périphérie interne. Les aimants 114 présentent ainsi une section réduite à une de leurs extrémités. Le côté des aimants 114 à angles biseautés est situé du côté de l'arbre du rotor 100. Les faces latérales des bras 102 sont formées chacune par un premier plan qui s'étend globalement radialement par rapport à l'axe X destiné à être en regard d'un angle biseauté de l'aimant 114. Les faces latérales des bras 102 comportent un deuxième plan incliné par rapport au premier plan de sorte que deux deuxièmes plans en regard l'un de l'autre d'un même logement sont parallèles l'un par rapport à l'autre et en regard de deux faces longitudinales de l'aimant 114. En l'occurrence, le rotor 100 comporte dix aimants 114 insérés dans dix logements 111 de forme complémentaires. Pour introduire un aimant 114 dans son logement ou l'en extraire, on peut par exemple le faire coulisser parallèlement à l'axe X du rotor 100. Pour plus de clarté on a supprimé à la figure 1 l'un des aimants pour mieux repérer les faces d'un logement 111 , ainsi que le ressort 122 selon l'invention décrit ci-après. Il ressort de ce qui précède et de la figure 1, d'une part, que chaque bras 102 comporte une première portion, globalement de largeur constante, issue de l'âme 101 prolongée par une deuxième portion s'évasant en direction opposée à l'axe X et terminée par les rebords 105 et d'autre part, que les aimants 114 occupent au maximum l'espace disponible dans le rotor. La machine pourra donc avoir la puissance maximum tout en étant compacte radialement. On obtient une solution à concentration de flux, les faces latérales en vis-à-vis de deux aimant consécutifs étant de même polarité. Dans ce mode de réalisation le rotor à une longueur de 41 mm et un diamètre de 61 mm. Bien entendu cela dépend des applications.

Le rotor 100 comprend pour chaque aimant une lame 119 ou plaquette réalisée en un matériau moins dur et plus souple que les aimants 114. La lame 119 est plate rectangulaire et a les mêmes dimensions et la même forme que la face externe de l'aimant 114 qu'elle recouvre avec ses bords en coïncidence. Les lames 119 sont par exemple réalisées en matériau plastique. Chaque lame 119 est positionnée entre les faces internes de deux rebords 105 tournés l'un vers l'autre et la face externe des aimants 114 orientée en direction opposée à l'axe X. La lame 119 a pour fonction de répartir les efforts appliqués par des ressorts 122 décrits ci-après et d'éviter, lors de l'insertion du rotor, que d'éventuelles poussières ne s'introduisent dans le fluide situé dans l'environnement de la machine électrique. S'il y a lieu, mais ce n'est pas obligatoire, une couche de colle plus souple que l'aimant 114 est interposée entre l'aimant 114 et la lame 119. Pour plus de détails sur la lame, on se référera au document FR2784248. Les lames 119 ferment les logements 111 et constituent des lames de retenue des aimants 114 en contact avec la périphérie externe de ceux-ci.

Pour assurer un maintien des aimants 114 à l'intérieur de leur logement 111 contre les rebords 105 via les lames 119, le rotor 100 comporte les ressorts 122 exerçant par déformation un effort radial sur l'aimant 114 de l'intérieur vers l'extérieur du rotor 100. A cet effet, les ressorts 122 sont positionnés entre la face interne de l'aimant 114 tournée du côté de l'axe X et le fond du logement 111 constitué par la face de l'âme 101 s'étendant entre deux bras 102 successifs. Le fond du logement 111 présente une forme plate pour faciliter l'appui des ressorts 122 contre le fond.

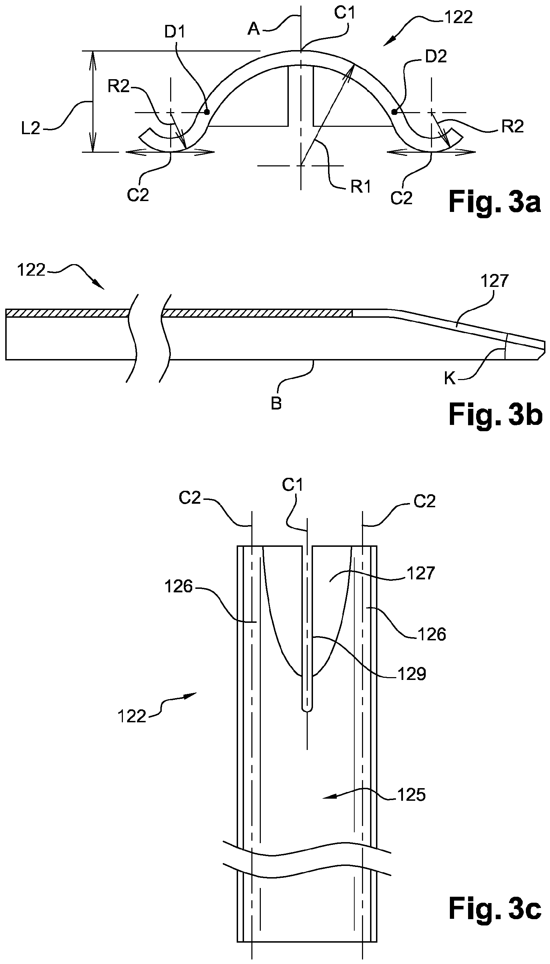

Comme bien visible sur les Figures 2 et 3, chaque ressort 122 comporte une portion 125 arrondie centrale, et deux portions 126 arrondies d'extrémité situées de part et d'autre de la portion 125 arrondie centrale. La portion 125 arrondie centrale et les portions 126 arrondies d'extrémité présentent des courbures inversées. En effet, il existe des droites d'inflexion D1, D2 situées entre la portion centrale 125 et chaque portion d'extrémité 126 à l'endroit du changement de courbure entre la portion centrale 125 et les portions d'extrémité 126. Le ressort 122 est symétrique par rapport à un plan vertical A passant par une extrémité de la portion centrale où la tangente à la courbe du ressort 122 est horizontale (cf. Figure 3a).

Le rayon de courbure R1 de la portion centrale 125 est supérieur au rayon de courbure R2 des portions d'extrémité 126. De préférence, le rayon R1 de courbure de la portion centrale 125 est environ trois fois plus grand que le rayon R2 de courbure des portions d'extrémité 126.

A l'état libre, c'est-à-dire non compressé, les ressorts 122 ont une largeur L1 inférieure à l'écart entre deux bras 102 au niveau de l'âme 101, et une hauteur L2 légèrement supérieure à l'écart entre l'âme 101 et la face de l'aimant 114 tournée vers l'axe X. La longueur L3 des ressorts 122 est sensiblement égale à la hauteur axiale du rotor 100.

Chaque ressort 122 présente de préférence une extrémité biseautée 127 suivant une direction longitudinale du ressort 122 pour faciliter l'insertion du ressort 122 entre un aimant 114 et une face intérieure d'un logement 111 dudit aimant 114.

Chaque ressort 122 comporte en outre une fente 129 le long de l'extrémité biseautée 127 pour réduire la rigidité de ladite extrémité biseautée 127 et conserver ainsi l'effet du ressort. La fente 129, de largeur L4, s'étend entre deux parties planes inclinées formant l'extrémité biseautée 127. De préférence, la fente 129 s'étend sur une longueur légèrement plus grande que la longueur suivant laquelle s'étend l'extrémité biseautée 127.

Lors du montage, les aimants permanents 114 avec les lames 119 ayant été préalablement introduits à l'intérieur des logements 111. Les ressorts 122 sont insérés entre deux bras 102 adjacents par leur extrémité biseautée 127 entre la face des aimants 114 et l'âme 101 du rotor.

De préférence, comme montré sur la figure 1, le ressort 122 est positionné de sorte que la convexité de la portion centrale 125 est positionnée du côté de la face **interne** de l'aimant 114; tandis que la convexité des portions d'extrémité 126 se trouve du côté de l'âme 101 du rotor 100.

Le ressort 122 présente alors un contact linéaire C1 avec un des éléments contre lesquels il est en appui, en l'occurrence la face de l'aimant 114 via la portion centrale 125, et deux contacts linéaires C2 avec l'autre élément, en l'occurrence le fond du logement 111 via les portions d'extrémité 126. Alternativement, il serait possible de retourner les ressorts 122 de sorte qu'ils présentent un contact linéaire avec le fond du logement 111 et deux contacts linéaires avec la face de l'aimant 114.

La hauteur de l'espace entre l'aimant 114 et l'âme 101 étant inférieure à la hauteur L2 du ressort, cette insertion du ressort 122 entre l'âme 101 et l'aimant 114 a tendance à comprimer le ressort 122 suivant sa hauteur, ce qui a pour effet d'écarter les extrémités du ressort 122 l'une de l'autre. Par réaction, le ressort 122 ainsi déformé a alors tendance à exercer un effort radial F1 de l'intérieur vers l'extérieur du rotor sur l'aimant 114 de manière à le maintenir en appui contre les rebords 105 (cf. Figure 1). Les ressorts 122 travaillent de préférence dans un domaine élasto-plastique afin de limiter les contraintes subies par les ressorts 122. En outre la largeur L1 du ressort 122 est fonction de la largeur du fond du logement 111 associé de sorte que le ressort sous contrainte ne vienne en contact avec les bords du fond du logement pour travailler dans de bonnes conditions. Ce ressort 122 rattrape les jeux de sorte que les tolérances de fabrication peuvent être larges. Dans une autre réalisation les logements 111 sont de largeur constante égale à la largeur du fond du logement 111 de la figure 1. Il en est de même des aimants 114 montés dans les logements 111 ; les bras étant plus larges au niveau de l'âme 101. La machine électrique de cette autre réalisation étant alors moins puissante, les ressorts 122 étant conservés, tandis que les aimants 114 sont moins larges.

Dans une réalisation, les ressorts 122 peuvent être réalisés en acier inoxydable, ou en tout autre matériau adapté à la fonction de maintien recherchée. Dans un exemple de réalisation non limitatif, chaque ressort 122 présente une largeur L1 de l'ordre de 5 millimètres, une hauteur L2 de l'ordre de 1, 5 millimètre, et une longueur L3 de l'ordre de 40 millimètres. Le rayon de courbure R1 de la portion centrale 125 est de l'ordre de 1.8 millimètres; tandis que le rayon de courbure R2 des portions d'extrémité est de l'ordre de 0.6 millimètre. La fente 129 présente une largeur L4 de l'ordre de 0.4 millimètre. L'extrémité biseautée 127 forme un angle K de l'ordre de 12 degrés par rapport à un plan B horizontal passant par une extrémité de la portion centrale 125 (cf. Figure 3b).

Bien évidemment, l'homme du métier peut modifier les dimensions et la configuration du rotor 100 ou du ressort 122 décrit dans les figures sans sortir du cadre de l'invention. Ainsi notamment, le ressort 122 pourra présenter de manière équivalente, à la place des formes arrondies de la portion centrale 125 et des portions d'extrémité 126, des formes en triangle (formes en V) ou des formes en U.

Les termes "horizontal" et "vertical" sont entendus par rapport à un ressort 122 ayant ses deux portions d'extrémité 126 reposant sur une surface plane, la portion centrale 125 étant tournée vers le haut.

Bien entendu la présente invention n'est pas limitée aux exemples de réalisations décrits. Ainsi le nombre d'aimants et de logements pourra être inférieur ou supérieur à dix selon les applications. L'âme 101 du paquet de tôle peut être liée en rotation à l'arbre de la machine électrique tournante de différentes manières. Par exemple l'arbre pourra comporter une portion moletée en étant plus dure que les tôles du corps du rotor. Dans ce cas, de manière connue, on emmanche à force l'arbre à l'intérieur de l'ouverture centrale du rotor délimité par l'âme. La liaison en rotation pourra être en variante réalisée à l'aide d'un dispositif à clavette intervenant entre la périphérie externe de l'arbre et la périphérie interne de l'âme. En variante la liaison en rotation est réalisée via un moyeu central cannelé intérieurement pour sa liaison avec l'arbre.

Les flasques précités pourront assurer un montage globalement étanche du rotor en association avec les lames 119. Ces flasques pourront comporter des saillies dotées de trous borgnes pour montage de masses d'équilibrage aux endroits adéquates comme décrit dans le document DE 2 346 345 auquel on se reportera.

En variante chaque flasque 200 peut porter un poids d'équilibrage 330 en forme de demi anneau, dont l'un est visible à la figure 4 sans modification de l'implantation des rivets 18 et des tirants 109. Les deux anneaux sont globalement diamétralement opposés et présentent chacun des creusures de réception des têtes des rivets 108 et des tirants 109 comme visible à la figure 4. Les creusures sont de forme oblongue. Les poids d'équilibrage pourront 330 êtres en laiton. Il en est de même en variante des flasques 200.

L'arbre du rotor pourra entraîner directement les palettes du compresseur. Le rotor et le stator pourront être refroidis par le liquide réfrigérant

La machine électrique tournante, dotée d'un rotor selon l'invention, pourra comporter un stator polyphasé, par exemple du type triphasé, dont les sorties des phases sont reliées, de manière connue, à un onduleur de pilotage de la machine comme décrit par exemple dans la demande EP 0 831 580 auquel on se reportera.

Il ressort de la description et des dessins que le ressort 122 est compact radialement et présente une extrémité biseautée 127 facilitant son insertion entre l'aimant 114 et l'âme 101. Ce ressort 122 travaille dans de bonnes conditions du fait qu'il travaille dans un domaine élasto- plastique sans venir en contact avec les bords du fond plat du logement 111 concerné. Ce ressort 122, de forme arrondie, travaille de manière élastique et présente un nombre de points d'appui réduit, ici au nombre de trois.

Le nombre d'aimants 114 pourra être en variante inférieur au nombre de logements en fonction de la puissance désirée de la machine électrique tournante. Par exemple deux logements diamétralement opposés peuvent être vides. En variantes les aimants peuvent être de nuance différente pour réduire les coûts. Par exemple au moins deux logements diamétralement opposés peuvent être équipés d'aimants en ferrite et les autres d'aimants en terre rare plus puissant mais plus coûteux.

## Revendications

1. Rotor (100) pour machine électrique comportant:
- une âme centrale (101),
- des bras (102) s'étendant radialement par rapport à l'âme (101), ces bras (102) comportant chacun deux rebords (105) s'étendant circonférentiellement de part et d'autre des bras (102),
- des aimants permanents (114) positionnés à l'intérieur de logements (111) délimités chacun par deux faces latérales en regard l'une de l'autre de deux bras adjacents (102), une face externe de l'âme (101) s'étendant entre les deux bras adjacents, et les rebords (105) des bras du rotor (100),
**caractérisé en ce qu'**il comporte en outre
- des ressorts (122) positionnés à l'intérieur des logements (111) entre la face externe de l'âme (101) et une face de l'aimant (114) tournée vers l'axe (X) du rotor (100), ces ressorts (122) assurant un maintien de l'aimant permanent (114) à l'intérieur de son logement (111) contre les rebords (105) des bras du rotor en exerçant par déformation un effort radial (F1) sur l'aimant permanent (114) de l'intérieur vers l'extérieur du rotor (100),
chacun des ressorts comportant en outre une extrémité biseautée (127) suivant une direction longitudinale du ressort (122) et une fente (129) le long de l'extrémité biseautée (127) pour réduire la rigidité de l'extrémité biseauté (127),
et les ressorts (122) présentent chacun un contact linéaire (C1) avec un des éléments contre lesquels est en appui le ressort (122) et deux contacts linéaires (C2, C3) avec l'autre élément contre lequel est en appui le ressort.

2. Rotor selon la revendication 1, **caractérisé en ce que** lesdits ressorts (122) travaillant dans un domaine élasto-plastique.

3. Rotor selon l'une des revendications 1 ou 2, **caractérisé en ce que** les ressorts (122) comportent chacun une portion (125) arrondie centrale, et deux portions (126) arrondies d'extrémité situées de part et d'autre de la portion (125) arrondie centrale, la portion (125) arrondie centrale et les portions (126) arrondies d'extrémité ayant des courbures inversées.

4. Rotor selon l'une des revendications 1 à 3, **caractérisé en ce qu'**il comporte en outre des lames (119) réalisées dans un matériau plus souple que les aimants permanents (114) positionnées entre les rebords (105) des bras (102) et la face de l'aimant permanent (114) tournée du côté opposé à l'axe (X) du rotor (100).

## Patentansprüche

1. Läufer (100) für eine elektrische Maschine, umfassend:
- einen zentralen Kern (101),
- Arme (102), die sich in Bezug auf den Kern (101) radial erstrecken, wobei diese Arme (102) jeweils zwei Ansätze (105) umfassen, die sich umfangsmäßig beiderseits der Arme (102) erstrecken,
- Permanentmagnete (114), die im Inneren von Aufnahmen (111) angeordnet sind, die jeweils durch zwei einander gegenüber liegende Seitenflächen von zwei benachbarten Armen (102) begrenzt werden, wobei sich eine Außenfläche des Kerns (101) zwischen den beiden benachbarten Armen und den Ansätzen (105) der Arme des Läufers (100) erstreckt,
**dadurch gekennzeichnet, dass** er ferner umfasst:
- Federn (122), die im Inneren der Aufnahmen (111) zwischen der Außenseite des Kerns (101) und einer der Achse (X) des Läufers (100) zugewandten Seite des Magneten (114) angeordnet sind, wobei diese Federn (122) ein Halten des Permanentmagneten (114) im Inneren seiner Aufnahme (111) gegen die Ansätze (105) der Arme des Läufers gewährleisten, indem sie durch Verformung eine radiale Kraft (F1) auf den Permanentmagneten (114) von innerhalb nach außerhalb des Läufers (100) ausüben,
wobei jede der Federn ferner ein entlang einer Längsrichtung der Feder (122) abgeschrägtes Ende (127) umfasst und einen Schlitz (129) entlang des abgeschrägten Endes (127), um die Steifigkeit des abgeschrägten Endes (127) zu verringern,
und die Federn (122) jeweils einen linearen Kontakt (C1) mit einem der Elemente aufweisen, an denen sich die Feder (122) abstützt, und zwei lineare Kontakte (C2, C3) mit dem anderen Element, an dem sich die Feder abstützt.

2. Läufer nach Anspruch 1, **dadurch gekennzeichnet, dass** die Federn (122) in einem elastoplastischen Bereich arbeiten.

3. Läufer nach einem der Ansprüche 1 oder 2, **dadurch gekennzeichnet, dass** die Federn (122) jeweils einen gerundeten Mittelabschnitt (125) umfassen und zwei gerundete Endabschnitte (126), die beiderseits des gerundeten Mittelabschnitts (125) gelegen sind, wobei der gerundete Mittelabschnitt (125) und die gerundeten Endabschnitte (126) entgegengesetzte Krümmungen besitzen.

4. Läufer nach einem der Ansprüche 1 bis 3, **dadurch gekennzeichnet, dass** er ferner Zungen (119) umfasst, die aus einem flexibleren Material als die Permanentmagnete (114) ausgeführt sind und zwischen den Ansätzen (105) der Arme (102) und der Seite des Permanentmagneten (114) angeordnet sind, die der zur Achse (X) des Läufers (100) entgegengesetzten Seite zugewandt ist.

## Claims

1. Rotor (100) for an electric machine, having:
- a central core (101),
- arms (102) extending radially with respect to the core (101), these arms (102) each having two lips (105) extending circumferentially on either side of the arms (102),
- permanent magnets (114) positioned inside housings (111) that are each delimited by two lateral faces, facing one another, of two adjacent arms (102), an external face of the core (101) extending between the two adjacent arms, and the lips (105) of the arms of the rotor (100),
**characterized in that** it also has
- springs (122) positioned inside housings (111) between the external face of the core (101) and a face of the magnet (114) that faces the axis (X) of the rotor (100), these springs (122) keeping the permanent magnet (114) inside its housing (111) against the lips (105) of the arms of the rotor by exerting, by deformation, a radial force (F1) on the permanent magnet (114) from the inside to the outside of the rotor (100),
each of the springs also having a bevelled end (127) in a longitudinal direction of the spring (122) and a slot (129) along the bevelled end (127) for reducing the rigidity of the bevelled end (127),
and the springs (122) each exhibiting linear contact (C1) with one of the elements against which the spring (122) bears and two linear contacts (C2, C3) with the other element against which the spring bears.

2. Rotor according to Claim 1, **characterized in that** said springs (122) act in an elasto-plastic domain.

3. Rotor according to either of Claims 1 and 2, **characterized in that** the springs (122) each have a rounded central portion (125), and two rounded end portions (126) situated on either side of the rounded central portion (125), the rounded central portion (125) and the rounded end portions (126) having inverse curvatures.

4. Rotor according to one of Claims 1 to 3, **characterized in that** it also has blades (119) that are made of a more flexible material than the permanent magnets (114) and are positioned between the lips (105) of the arms (102) and the face of the permanent magnet (114) facing away from the axis (X) of the rotor (100).
